# FASCICULE DE BREVET EUROPEEN

(11) **EP 4 082 841 B1**
(45) Date de publication et mention de la délivrance du brevet: **07.05.2025**
(21) Numéro de dépôt: 22169799.8
(22) Date de dépôt: 25.04.2022
(51) Int. Cl.: B60R 13/08, A62C 2/06, B32B 17/10, B61D 17/18, B62D 65/02

(54) **CLOISON ANTI-FEU D'INTÉRIEUR DE VÉHICULE**
BRANDSCHUTZWAND IM FAHRZEUGINNENRAUM
FIREPROOF PARTITION FOR THE INSIDE OF A VEHICLE

(30) Priorité: 26.04.2021 FR 2104298
(43) Date de publication de la demande: 02.11.2022
(73) Titulaire: SpeedInnov, 75008 Paris (FR)
(72) Inventeur: GUILLOTEAU, Isabelle, 17440 AYTRE (FR)
(74) Mandataire: Plasseraud IP

(56) Documents cités:
- EP-A1- 2 078 538
- EP-A1- 2 100 791
- WO-A1-01/83033
- WO-A1-2014/095620
- US-A1- 2015 159 754

## Description

La présente invention concerne une cloison anti-feu d'intérieur de véhicule.

Pour des raisons de sécurité, il est nécessaire d'étanchéifier au feu les parois d'un véhicule, notamment les cloisons délimitant des compartiments recevant des équipements électroniques. La publication WO2014/095620A1 divulgue une cloison anti-feu selon le préambule de la revendication 1.

Dans le cas des véhicules ferroviaires par exemple, les normes de protection incendie associées à des barrières au feu, comme par exemple la norme européenne EN 45545-3 (version d'août 2013), exigent que la cloison entre la cabine de conduite et le compartiment technique de la motrice située à l'arrière de la cabine de conduite soit résistante au feu pendant au moins 15 minutes.

Afin de répondre à ces exigences, il est connu d'installer des cloisons anti-feu constituées de plaques épaisses. Les plaques épaisses sont généralement des tôles métalliques, mais peuvent également être des plaques fabriquées en bois ignifugé, en liège ou en un matériau comprenant de la silice.

Par exemple, une tôle en aluminium de 5 mm d'épaisseur permet de répondre à l'exigence de résistance au feu de 15 minutes.

Cependant, une tôle avec un telle épaisseur présente désavantageusement une masse importante et un coût élevé.

Un des buts de l'invention est de proposer une cloison anti-feu performante, légère et économique.

A cet effet, l'invention a pour objet une cloison anti-feu selon la revendication 1.

Le recouvrement partiel de la première face de la plaque avec de la matière intumescente permet d'obtenir une résistance au feu satisfaisante tout en limitant le coût et le poids de la cloison anti-feu, notamment en prévoyant une plaque plus fine.

Dans des modes de réalisation particulier, la cloison anti-feu comprend une ou plusieurs des caractéristiques optionnelles suivantes et selon les revendications 2 à 8, prise(s) individuellement ou suivant toute combinaison techniquement possible :
- la matière intumescente a un degré d'intumescence supérieur à 10 pour une température dépassant les 150°C ;
- la matière intumescente a une densité supérieure à 1 g/cm³ et/ou inférieure à 1,5 g/cm³, et plus particulièrement sensiblement égale à 1,2 g/cm³ ;
- la deuxième face de la plaque est dépourvue de matière intumescente recouvrant cette deuxième face, ou est recouverte de matière intumescente, complètement ou seulement partiellement ;
- la matière intumescente située sur la deuxième face de la plaque est disposée en bandes de matière intumescente ;
- les bandes situées sur la deuxième face s'étendent parallèlement entre elles ;
- les bandes de matière intumescente sont réparties de manière régulière sur la deuxième face ;
- la deuxième face de la plaque présente une alternance de gorges et de bosses ;
- la matière intumescente est disposée dans les gorges formées sur la deuxième face sans recouvrir les bosses ; et
- la matière intumescente est disposée sur la deuxième face avec une épaisseur comprise supérieure à 0,5 mm, en particulier supérieure à 1 mm et/ou inférieure à 4 mm, en particulier inférieure à 3 mm.

L'invention a également pour objet un véhicule selon la revendication 9.

L'invention sera mieux comprise à la lecture de la description qui va suivre, donnée uniquement à titre d'exemple, et faite en se référant aux dessins annexés, sur lesquels :
- la figure 1 est une vue de face d'une cloison anti-feu comprenant une plaque partiellement recouverte de matière intumescente ;
- la figure 2 est une vue de côté de la cloison de la figure 1 avant expansion de la matière intumescente ;
- la figure 3 est une vue de côté de la cloison de la figure 1 après expansion de la matière intumescente ;
- la figure 4 est une vue de côté d'une autre cloison anti-feu avant expansion de la matière intumescente ; et
- la figure 5 est une vue de côté de la cloison de la figure 4 après expansion de la matière intumescente.

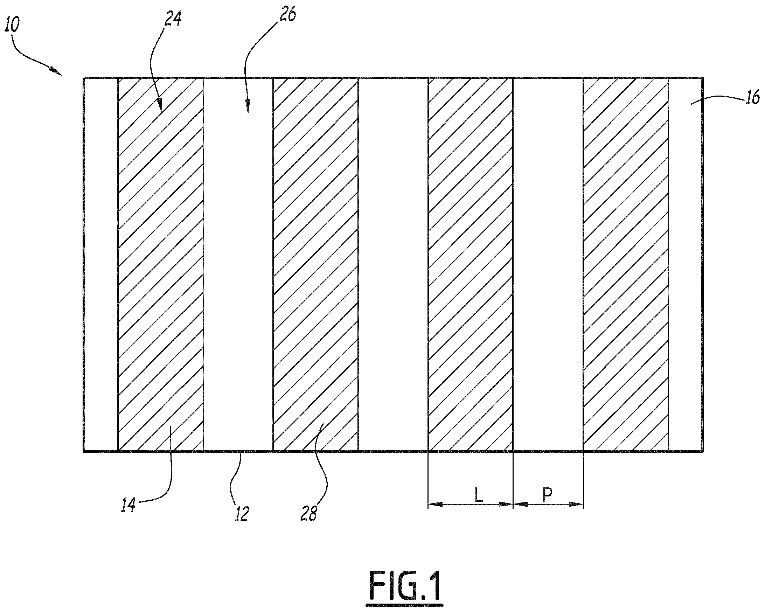

La figure 1 illustre une cloison anti-feu 10 d'intérieur de véhicule. Le véhicule est par exemple un véhicule ferroviaire ou un véhicule routier, tel qu'un bus.

La cloison anti-feu 10 est par exemple destinée à être fixée à l'intérieur de la caisse du véhicule ferroviaire, pour séparer une cabine de conduite et un compartiment technique contenant des équipements électriques.

La cloison anti-feu 10 comprend une plaque 12 et de la matière intumescente 14.

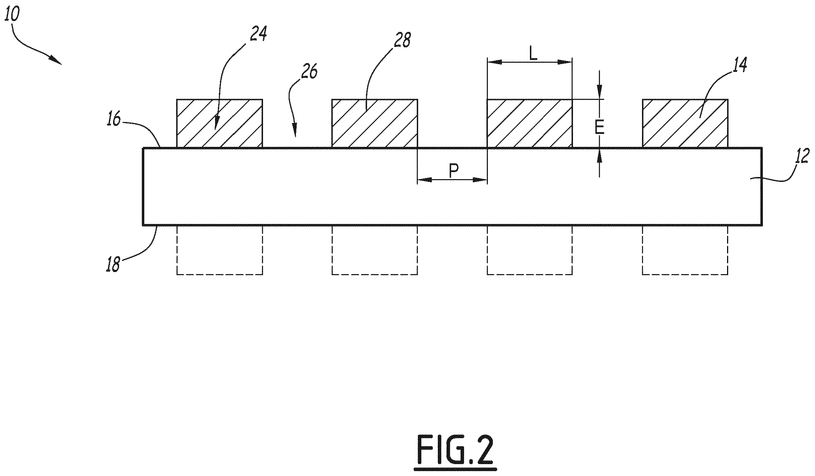

Comme illustré sur la figure 2, la plaque 12 présente une première face 16 et une deuxième face 18 opposées.

Dans l'exemple de la cloison anti-feu 10 s'étendant entre la cabine de conduite et le local technique de la motrice, la première face 16 s'étend par exemple du côté de la cabine de conduite et la deuxième face 18 s'étend du côté du local technique.

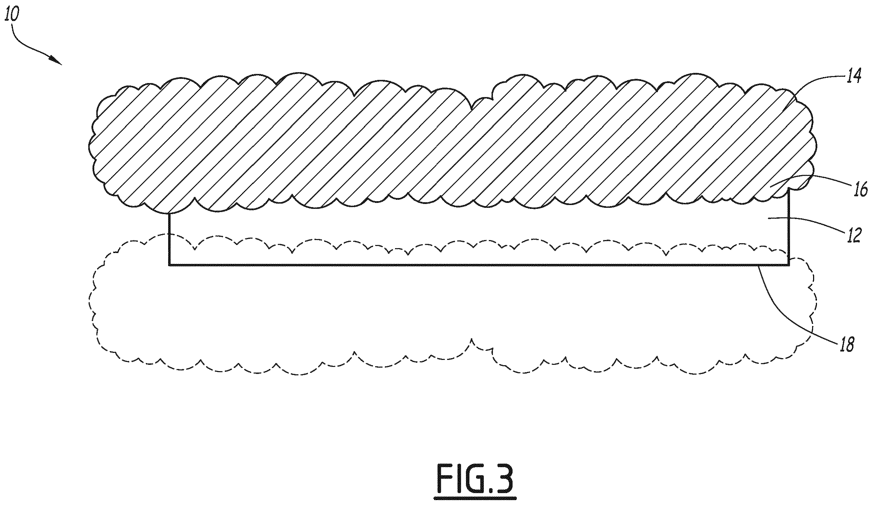

La plaque 12 est par exemple une plaque métallique, en particulier une tôle plate, comme cela est représenté sur les figures 2 et 3.

Avantageusement, la plaque 12 métallique est fabriquée en un métal léger, en particulier en aluminium.

En variante, la plaque 12 est fabriquée dans un matériau non métallique, par exemple en bois ignifugé, en liège ou en un matériau comprenant de la silice.

De préférence, la plaque 12 a une épaisseur supérieure à 1 mm, en particulier supérieure à 2 mm et/ou une épaisseur inférieure à 5 mm, en particulier inférieure à 4 mm.

Comme illustré sur la figure 2, la matière intumescente 14 est disposée sur la première face 16 de la plaque 12 et recouvre seulement partiellement la première face 16 de la plaque 12.

La première face 16 de la plaque 12 possède au moins une zone recouverte 24, chaque zone recouverte 24 étant recouverte par de la matière intumescente 14, et au moins une zone non-recouverte 26, chaque zone non-recouverte 26 étant dépourvue de matière intumescente 14.

Avantageusement, la première face 16 de la plaque 12 possède une pluralité de zones recouvertes 24 séparées les unes des autres par des zones non-recouvertes 26.

La matière intumescente 14 est disposée sur la première face 16 avec une épaisseur E supérieure à 0,5 mm, en particulier supérieure à 1 mm et/ou inférieure à 4 mm, en particulier inférieure à 3 mm.

D'après l'invention, la matière intumescente 14 située sur la première face 16 de la plaque 12 est disposée en bandes 28 de matière intumescente.

Chaque bande 28 s'étend suivant une ligne d'extension de la bande 28 et présente une largeur L prise perpendiculairement à cette ligne d'extension.

Chaque bande 28 est avantageusement de largeur L constante, les bandes 28 étant de préférence de même largeur L.

Les bandes 28 présentent par exemple une largeur L comprise entre 10 mm et 100 mm.

Les bandes 28 s'étendent avantageusement parallèlement entre elles.

Dans un exemple de réalisation particulier, et comme illustré sur la Figure 1, les bandes 28 sont rectilignes et s'étendent alors selon une direction d'extension.

Comme cela est illustré sur la figure 1, dans un exemple de réalisation, les bandes 28 parallèles sont réparties de manière régulière sur la première face 16 de la plaque 12, avec un pas d'espacement P constant.

Le pas d'espacement P entre deux bandes 28 adjacentes est par exemple compris entre 10 mm et 100 mm.

Les zones non-recouvertes 26 définissent ainsi également des bandes de la plaque non recouvertes de largeur égale au pas d'espacement P entre deux bandes 28 adjacentes.

La matière intumescente 14 est une matière qui subit une expansion en volume en cas d'exposition à une température élevée. La matière intumescente 14 subit une expansion en volume en formant par exemple une mousse microporeuse communément appelée « meringue » de volume supérieur au volume avant expansion et/ou en formant des filaments.

Le degré d'intumescence d'une matière intumescente 14 est définit comme le rapport entre le volume après expansion et le volume avant expansion.

Avantageusement, la matière intumescente 14 a un degré d'intumescence supérieur à 10, et avantageusement supérieur à 20, en cas d'exposition à une température supérieure à 150°C.

La matière intumescente 14 a de préférence une densité supérieure à 1 g/cm³ et/ou inférieure à 1,5 g/cm³, et plus particulièrement sensiblement égale à 1,2 g/cm³.

La matière intumescente 14 est par exemple un matériau non-fibreux à base de graphite de degré d'intumescence supérieur à 25.

En cas de feu se déclarant à proximité de la cloison anti-feu 10, la température dépassant les 150°C, les bandes 28 subissent une expansion en volume.

De préférence, la matière intumescente 14 recouvre la première face 16 de la plaque 12 de telle manière que l'intégralité de la première face 16 de la plaque 12 est recouverte par la matière intumescente 14 après exposition à une température sensiblement supérieure à 150°C et pendant une durée d'au moins quelques minutes, comme illustré sur la figure 3.

Les zones non-recouverte 26, qui initialement ne sont pas recouvertes par la matière intumescente 14 non expansées, sont ensuite recouvertes par la matière intumescente 14, après expansion de celle-ci.

Un telle cloison anti-feu 10 présente une bonne performance de résistance au feu.

Par exemple, une telle cloison anti-feu 10 comprenant une plaque 12 en aluminium de 3 mm d'épaisseur dont la première face 16 est recouverte à 50% de bandes28 de matières intumescentes de 2 mm d'épaisseur permet de résister 15 minutes au feu selon les conditions définies par la norme européenne EN 45545-3 (version d'août 2013).

De plus, une telle cloison anti-feu 10 présente l'avantage d'être légère.

En effet, par exemple, une telle cloison anti-feu 10 comprenant une plaque 12 en aluminium de 3mm d'épaisseur dont la première face 16 est recouverte à 50% de bandes 28 de matières intumescentes de 2 mm d'épaisseur est environ 30% moins lourde qu'une cloison comprenant uniquement une plaque en aluminium de 5 mm d'épaisseur, pour la même résistance au feu.

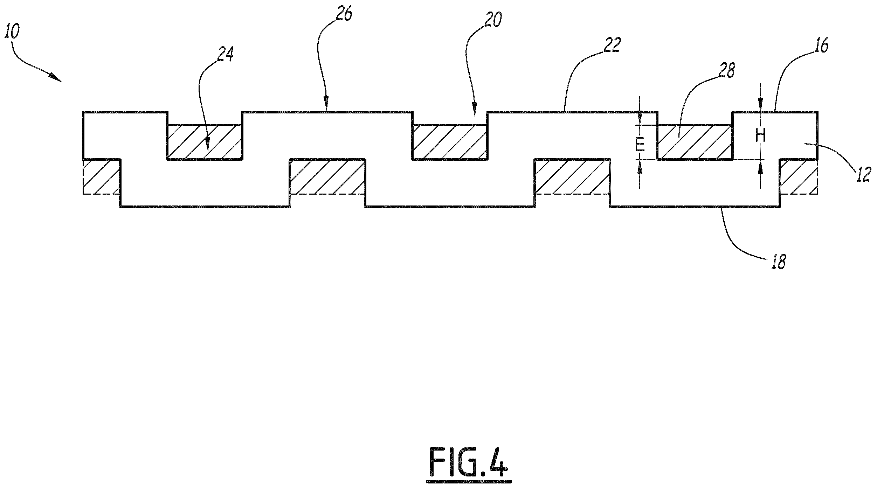

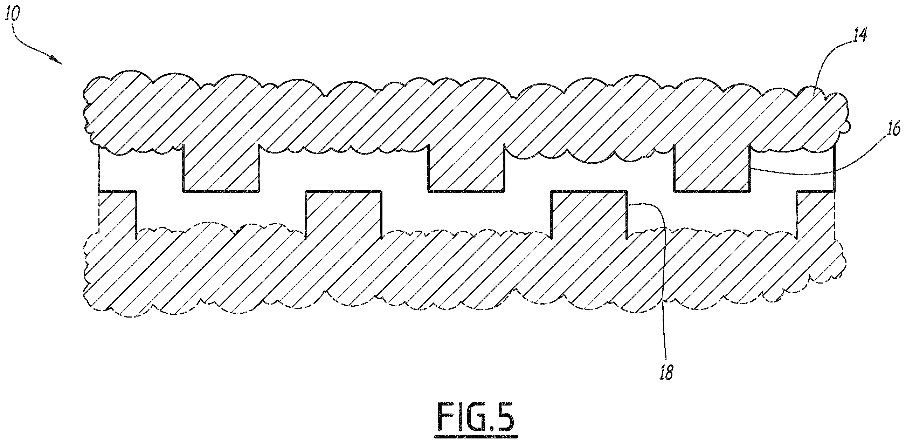

La cloison anti-feu des figures 4 et 5 diffère de celle des figures 2 et 3 en ce que la plaque 12 est ondulée ou crénelée de manière à définir sur chacune de la première face 16 et de deuxième face 18 une alternance de gorges 20 et de bosses 22 parallèles.

Dans l'exemple illustré sur les figures 4 et 5, la plaque 12 est crénelée. Elle présente une section transversale en créneaux. En variante, elle est ondulée et présente une section transversale en forme d'onde.

Une gorge 20 sur la première face 16 correspond à une bosse 22 sur la deuxième face 18.

La matière intumescente 14 est disposée sur la première face 16 en formant des bandes 28 parallèle, chaque bande 28 étant logée dans une gorge 20 de la première face 16. La matière intumescente 14 ne recouvre pas les bosses 22 définies entre les gorges 20.

Comme cela est illustré sur la figure 4, les zones recouvertes 24 sont définies dans les gorges 20 de la première face 16, alors que les zones non-recouvertes 26 sont définies dans les bosses 22 de la première face 16.

Avantageusement, l'épaisseur E des bandes 28 collées dans les gorges 20 de la première face 16 est inférieure à la hauteur H des gorges 20. La matière intumescente 14 est ainsi protégée dans les gorges 20 et ne rentre pas en contact avec des éléments extérieurs, comme des câbles ou autre connecteurs, qui pourrait endommager les bandes 28.

Comme illustré sur la figure 5, les bandes 28 sont disposées dans les gorges 20 de telle manière que lors de leur expansion, la matière intumescente 14 remplit d'abord les gorges 20 et recouvre ensuite les bosses 22 de préférence entièrement, afin de protéger l'intégralité de première face 16 de la plaque.

L'invention n'est pas limitée aux exemples de réalisation décrits ci-dessus, d'autres exemples de réalisation étant envisageables.

Dans les exemples de réalisation des figures 1 à 5, seule la première face 16 de la plaque 12 est recouverte de matière intumescente 14, la matière intumescente 14 recouvrant seulement partiellement la première face 16.

En option, comme illustré en pointillés sur les figures 2 à 5 la deuxième face 18 de la plaque 12 est aussi recouverte de matière intumescente 14.

Dans ce cas, avant expansion, la matière intumescente 14 recouvre complétement la deuxième face 18 de la plaque 12 ou recouvre seulement partiellement la deuxième face 18 de la plaque 12.

De préférence, avant expansion, la matière intumescente 14 située sur la deuxième face 18 recouvre seulement partiellement la deuxième face 18.

Dans un exemple de réalisation, la matière intumescente 14 située sur la deuxième face 18 est disposées selon un agencement analogue à celui de la matière intumescente 14 sur la première face 16 de la plaque 12.

Les considérations indiquées plus haut relativement à la disposition de la matière intumescente 14 sur la première face 16 s'appliquent à la disposition de la matière intumescente 14 sur la deuxième face 18.

Dans un exemple de réalisation particulier, comme illustré sur les figures 2 et 3, avant expansion, la matière intumescente 14 disposée sur la deuxième face 18 recouvre seulement partiellement la deuxième face 18, en étant agencée en bandes 28 en matière intumescente rectilignes, parallèles et de même largeur, avec une pas d'espacement constant entre les bandes.

Dans un autre exemple de réalisation particulier, comme représenté sur les figures 4 et 5, avant expansion, la matière intumescente 14 disposée sur la deuxième face 18 recouvre seulement partiellement la deuxième face 18, en étant disposée dans les gorges 20 définies sur la deuxième face 18 sans recouvrir les bosses 22.

La matière intumescente 14 a le même comportement sur la deuxième face 18 que celui décrit précédemment pour la première face 16.

De préférence, la matière intumescente 14 est disposées de manière qu'après expansion, la matière intumescente 14 recouvre complètement la deuxième face 16.

Le recouvrement des première et deuxième faces 16, 18 de la plaque 12 offre l'avantage d'augmenter la résistance au feu de la cloison anti-feu 10, par exemple si la cloison anti-feu 10 sépare deux compartiments contenant des équipements électriques.

Par ailleurs, d'après l'invention et comme dans les exemples de réalisation des Figures 1 à 5, la matière intumescente 14 recouvrant seulement partiellement la première face 16, et, optionnellement seulement partiellement la deuxième face 18, est agencée en bandes 28 parallèles entre elles.

La disposition en bandes 28 parallèles facilite la dépose de la matière intumescente 14.

Ceci étant, d'autres dispositions de la matière intumescente 14 sur la première face 16 et/ou sur la deuxième face 18 sont envisageables pour un recouvrement seulement partiel définissant des zone recouvertes 24 et des zones non-recouvertes 26.

Dans un exemple de réalisation particulier, de la matière intumescente 14 disposée sur la première face 16 est agencée sous forme d'une matrice de points ou en damier.

Dans tous les cas, de préférence, la matière intumescente 14 est disposée de manière que chacune de la première face 16 et de la deuxième face 18 qui est recouverte seulement partiellement par la matière intumescente 14 avant expansion, est recouverte entièrement par la matière intumescente 14 après expansion.

## Revendications

1. Cloison anti-feu (10) d'intérieur de véhicule, la cloison anti-feu (10) comprenant :
- une plaque (12) présentant une première face (16) et une deuxième face (18) opposées ; et
- de la matière intumescente (14) recouvrant seulement partiellement la première face (16) de la plaque (12), **caractérisée en ce que** la matière intumescente (14) étant disposée sur la première face (16) en bandes (28).

2. Cloison anti-feu selon la revendication 1, dans laquelle la plaque (12) est métallique, en particulier en aluminium.

3. Cloison anti-feu la revendication 1 ou la revendication 2, dans laquelle la plaque (12) a une épaisseur supérieure à 1 mm, en particulier supérieure à 2 mm et/ou une épaisseur inférieure à 5 mm, en particulier inférieure à 4 mm.

4. Cloison anti-feu selon l'une quelconque des revendications précédentes, dans laquelle les bandes (28) s'étendent parallèlement entre elles.

5. Cloison anti-feu selon l'une quelconque des revendications précédentes, dans laquelle les bandes (28) de matière intumescente sont réparties de manière régulière sur la première face (16).

6. Cloison anti-feu selon l'une quelconque des revendications précédentes, dans laquelle la plaque (12) est ondulée ou crénelée de manière à définir, sur chacune de la première face (16) et de deuxième face (18), une alternance de gorges (20) et de bosses parallèles (22), la matière intumescente (14) étant disposée dans les gorges (20) formée sur la première face (16), sans recouvrir les bosses (22).

7. Cloison anti-feu selon l'une quelconque des revendications précédentes, dans laquelle la matière intumescente (14) est disposée sur la première face (16) avec une épaisseur comprise supérieure à 0,5 mm, en particulier supérieure à 1 mm et/ou inférieure à 4 mm, en particulier inférieure à 3 mm.

8. Cloison anti-feu selon l'une quelconque des revendications précédentes, dans laquelle de la matière intumescente (14) recouvre au moins partiellement la deuxième face (18) de la plaque (12).

9. Véhicule, notamment véhicule ferroviaire, comprenant au moins un compartiment recevant des équipements électroniques, ledit compartiment étant délimité au moins en partie par une cloison anti-feu (10) selon l'une quelconque des revendications 1 à 8.

## Patentansprüche

1. Brandschutzwand (10) für den Innenraum eines Fahrzeugs, wobei die Brandschutzwand (10) umfasst:
- eine Platte (12) mit einer ersten Seite (16) und einer zweiten Seite (18), die einander gegenüberliegen; und
- intumeszierendes Material (14), das die erste Seite (16) der Platte (12) nur teilweise bedeckt,
**dadurch gekennzeichnet, dass** das intumeszierende Material (14) auf der ersten Seite (16) in Streifen (28) angeordnet ist.

2. Brandschutzwand nach Anspruch 1, wobei die Platte (12) metallisch, insbesondere aus Aluminium, ist.

3. Brandschutzwand nach Anspruch 1 oder Anspruch 2, wobei die Platte (12) eine Dicke von mehr als 1 mm, insbesondere mehr als 2 mm, und/oder eine Dicke von weniger als 5 mm, insbesondere weniger als 4 mm, aufweist.

4. Brandschutzwand nach einem der vorhergehenden Ansprüche, wobei die Streifen (28) parallel zueinander verlaufen.

5. Brandschutzwand nach einem der vorhergehend en Ansprüche, wobei die Streifen (28) aus intumeszierendem Material gleichmäßig auf der ersten Seite (16) verteilt sind.

6. Brandschutzwand nach einem der vorhergehenden Ansprüche, wobei die Platte (12) gewellt oder gezackt ist, so dass auf jeder der ersten Seite (16) und der zweiten Seite (18) alternierend Rillen (20) und parallele Erhöhungen (22) definiert sind, wobei das intumeszierende Material (14) in den auf der ersten Seite (16) gebildeten Rillen (20) angeordnet ist, ohne die Erhöhungen (22) zu bedecken.

7. Brandschutzwand nach einem der vorhergehenden Ansprüche, wobei das intumeszierende Material (14) auf der ersten Seite (16) mit einer Dicke von mehr als 0,5 mm, insbesondere mehr als 1 mm und/oder weniger als 4 mm, insbesondere weniger als 3 mm, angeordnet ist.

8. Brandschutzwand nach einem der vorhergehend en Ansprüche, wobei intumeszierendes Material (14) wenigstens teilweise die zweite Seite (18) der Platte (12) bedeckt.

9. Fahrzeug, insbesondere Schienenfahrzeug, mit wenigstens einem Abteil zur Aufnahme elektronischer Einrichtungen, wobei das Abteil wenigstens teilweise durch eine Brandschutzwand (10) nach einem der Ansprüche 1 bis 8 begrenzt ist.

## Claims

1. Vehicle interior fire partition (10), the fire partition (10) comprising:
- a plate (12) having a first face (16) and a second face (18) opposite each other; and
- intumescent material (14) only partially covering the first face (16) of the plate (12), **characterised in that** the intumescent material (14) is disposed on the first face (16) in strips (28).

2. Fire partition according to claim 1, wherein the plate (12) is metallic, in particular made of aluminium.

3. Fire partition according to claim 1 or 2, wherein the plate (12) has a thickness greater than 1 mm, in particular greater than 2 mm and/or a thickness less than 5 mm, in particular less than 4 mm.

4. Fire partition according to any one of the preceding claims, wherein the strips (28) extend parallel to each other.

5. Fire partition according to any one of the preceding claims, wherein the strips (28) of intumescent material are evenly distributed on the first face (16).

6. Fire partition according to any one of the preceding claims, wherein the plate (12) is corrugated or crenellated so as to define, on each of the first face (16) and second face (18), an alternation of parallel grooves (20) and protrusions (22), the intumescent material (14) being disposed in the grooves (20) formed on the first face (16), without covering the protrusions (22).

7. Fire partition according to any one of the preceding claims, wherein the intumescent material (14) is disposed on the first face (16) with an inclusive thickness of more than 0.5 mm, in particular more than 1 mm and/or less than 4 mm, in particular less than 3 mm.

8. Fire partition according to any one of the preceding claims, wherein intumescent material (14) at least partially covers the second face (18) of the plate (12).

9. Vehicle, in particular a railway vehicle, comprising at least one compartment receiving electronic equipment, said compartment being at least partially delimited by a fire partition (10) according to any one of claims 1 to 8.
